# EUROPÄISCHE PATENTSCHRIFT

(11) **EP 2 532 633 B1**
(45) Veröffentlichungstag und Bekanntmachung des Hinweises auf die Patenterteilung: **13.05.2015**
(21) Anmeldenummer: 12168743.8
(22) Anmeldetag: 21.05.2012
(51) Int. Cl.: C04B 111/00, C04B 28/04

(54) **Verfahren zur Herstellung einer Form für das Herstellen von Tondachziegeln durch Nasspressung**
Method for producing a mould for producing clay roofing tiles by means of wet moulding
Procédé de fabrication d'un moule pour la fabrication de tuiles en argile par pressage humide

(30) Priorität: 07.06.2011 DE 102011106218
(43) Veröffentlichungstag der Anmeldung: 12.12.2012
(73) Patentinhaber: Redco S.A., 1880 Kappelle-op-den-Bos (BE); Etex Holding GmbH, 69126 Heidelberg (DE)
(72) Erfinder: Brem, Dr. Hartmut, 86368 Gersthofen (DE); Kalbskopf, Dr. Reinhard, 3080 Tervuren (BE)
(74) Vertreter: Van Steenlandt, Wim August Maria

(56) Entgegenhaltungen:
- CN-A- 1 130 160
- DE-A1- 19 744 862
- GB-A- 2 441 313
- CHEMICAL ABSTRACTS, 14. Januar 1985 (1985-01-14), XP000191309, ISSN: 0009-2258

## Beschreibung

Die Erfindung betrifft ein Verfahren zur Herstellung einer Form für das Herstellen von Tondachziegeln durch Nasspressen. Die Erfindung betrifft des Weiteren die Verwendung einer solchen Form zur Herstellung von Tondachziegeln durch Nasspressung.

Zur Herstellung von keramischen Dachziegeln wird üblicherweise ein vakuum-extrudiertes Gemisch aus Tonpulver und anderen fein gemahlenen mineralischen Bestandteilen unter Zugabe einer abgemessenen Wassermenge in eine Form gepresst und ergibt dort einen kohäsiven Ziegelkörper, der eine für die weitere Handhabung ausreichende Festigkeit hat. Der Ziegel wird dann zugeschnitten, getrocknet, glasiert und abschließend gebrannt. Am häufigsten werden Gipsformen verwendet, weil die Anzahl ihrer Poren je cm² und deren Größe das Wasserabsorptionsvermögen der Form für eine große Anzahl von Pressvorgängen gewährleisten, ohne dass Tonpartikel die Poren zusetzen. Das Ton/Wasser-Gemisch wird in eine Negativform aus Gips gepresst, die in einem Stahlrahmen aufgenommen ist und als Unterform dient sowie in eine weitere Negativform aus Gips, die gleichfalls in einem Stahlrahmen aufgenommen ist und als Oberform dient. Anschließend wird das Tongemisch zu einem grünen Ziegel der gewünschten Form gepresst.

Infolge des hohen Pressdruckes wird das in dem Tongemisch enthaltene Wasser dabei von dem Gips in der Unterform aufgenommen und abgesaugt.

Jeder Pressvorgang führt zu einem deutlichen Verschleiß der als Oberform und Unterform verwendeten, negativen Gipsformen; des Weiteren ist Gips bruchanfällig und das Gewicht der Gipsformen hoch. Wegen ihrer kurzen Standzeit müssen die Gipsformen häufig ersetzt werden. Währenddessen steht die Presse. Die Herstellung neuer Gipsformen und der Ersatz verschlissener Formen mit entsprechenden Stillstandszeiten ist zeit- und kostenaufwändig.

Aus der WO 94/03313 ist eine besonders verschleißfeste Form bekannt, deren Standzeit erheblich länger als diejenige von Gipsformen ist. Diese Form besteht aus zwei Schichten, von denen eine aus fein gemahlenem, gesintertem oder geschäumtem Keramikmaterial besteht, das mit dem zu formenden Material in Kontakt kommt, während eine darunter liegende Schicht aus grob gemahlenem, gesintertem oder geschäumtem Keramikmaterial oder geschäumtem Beton besteht. Die Herstellung solcher zweischichtiger Formen ist zeit- und kostenaufwändig.

Aus der US-A-4 908 174 ist eine poröse gehärtete Kunststoffzusammensetzung als Ersatz für Gips für die Herstellung von Formen für keramische Artikel bekannt.

Aus der EP-A-1 136 214 ist eine Form aus offenporig gesintertem Metall zur Herstellung von keramischen Materialien bekannt.

Die Formen nach der US-A-4 908 174 und EP-A-1 136 214 haben nicht die erforderliche Porengrößen und -anzahl, mit der Folge, dass die Oberfläche von unter Verwendung von solchen Formen hergestellten Tonziegeln unbefriedigend ist, weil die Wasserabführung während der Herstellung der Tonziegel nicht ausreicht.

Aus der DD-A-227 430 sind Formen aus Polyurethan bekannt. Sie sind jedoch mechanisch weniger widerstandsfähig als Formen aus anorganischen Werkstoffen.

Aus der DE 690 07 917 T2 sind schließlich ein Verfahren zur Herstellung eines Gemischs auf der Grundlage von mit Verstärkungsfasern bewehrtem Zement und aus einem solchen Gemisch hergestellte Erzeugnisse bekannt, wobei sich das Gemisch aus 100 Gewichtsteilen Zement und 5 bis 20 Gewichtsteilen eines weiteren pulverförmigen Stoffes zusammensetzt und der weitere pulverförmige Stoff aus einer Reihe von Stoffen gewählt werden kann, die auch Wollastonitpulver umfassen.

Aus CHEMICAL ABSTRACTS, XP000191309, ISSN: 0009-2258 ist eine Form zum Gießen von Metall mit niedriger Schmelztemperatur, speziell von Aluminium bekannt, die aus einem Gemisch aus Si02, gelöschtem Kalk, Wollastonit und Glasfasern hergestellt ist.

Aus der DE 19744862 A1 ist eine Pressform, insbesondere zur Verpressung von Dachziegeln, und ein Verfahren zur Herstellung einer solchen Pressform bekannt. Die Druckschrift beschreibt zum einen den Stand der Technik in Form einer aus Gips hergestellten Form, und, als Lösung für das Problem der mangelnden elektrischen Leitfähigkeit der Gipsform, die Ausbildung der formgebenden Flächen aus Siliziumkarbid (SiC). Dadurch soll das Ablösen der Pressformlinge aus Ton durch Elektroschock ermöglicht werden.

Der Erfindung liegt die Aufgabe zugrunde, ein Verfahren der einleitend angegebenen Art zu schaffen, mit denen sich Formen mit hoher Verschleißfestigkeit und langer Standzeit für die Fertigung von keramischen Ziegeln herstellen lassen.

Diese Aufgabe wird erfindungsgemäß gelöst durch ein Verfahren zur Herstellung einer Form für das Herstellen von Tondachziegeln durch Nasspressung gemäß Anspruch 1 und die Verwendung einer Form zur Herstellung von Tondachziegeln durch Nasspressung gemäß Anspruch 7. Die erfindungsgemäß hergestellte oder zu verwendende Tondachziegel-Nasspressforrn ist aus einer hydraulischen Zusammensetzung, die Zement und Wollastonit umfasst, hergestellt.

Aus dieser Zusammensetzung hergestellte Formen haben im Vergleich zu Gipsformen des Weiteren den Vorteil von niedrigeren Kosten und sind ökologisch unbedenklich, weil sie als inerter Abfall zu klassifizieren sind, während Gips wegen seines Gehalts an löslichen Salzen lediglich als ungefährlicher Abfall klassifiziert ist.

Die erfindungsgemäß zu verwendende hydraulische Zusammensetzung kann als weitere Bestandteile oder Zusätze u.a. Kalk, Graphit, Plastifizierungsmittel, Sand und deren Gemische umfassen.

Die Erfindung erstreckt sich insbesondere auf ein Verfahren zur Herstellung von Formen zum Herstellen von Tondachziegeln, das darin besteht, eine gießfähige Aufschlämmung oder Suspension zu erzeugen, die durch Zumischen von Wasser zu der hydraulischen Zusammensetzung nach der Erfindung erhalten wird.

Die Erfindung wird nachfolgend anhand von Beispielen näher erläutert.

In der Tabelle 1 sind zur Herstellung der Form bestimmte Zusammensetzungen angegeben. Beispiel 1 (Bsp. 1) ist eine zur Herstellung einer Zementform mit Wollastonit (Nordkalk FW325) geeignete Zusammensetzung, während Vergleichsbeispiel 1 (V.-Bsp. 1) eine entsprechende Zusammensetzung ohne Wollastonit ist.

**Tabelle 1**

| Zusammensetzung (Gew.-%) | Bsp. 1 | V.-Bsp. 1 |
|---|---|---|
| Zement CEM I 42.5 | 32,632 | 32,632 |
| Kalkpulver | 3,7 | 3,7 |
| Graphit | 0,5 | 0,5 |
| Flugaschen | | 5,77 |
| Nordkalk FW325 | 5,77 | |
| Wasser | 17,77 | 17,77 |
| Plastifizierer | 0,064 | 0,064 |
| Wasserbindemittel | 0,064 | 0,064 |
| Zuschläge (Sand 0/2) | 39,5 | 39,5 |

Als Plastifizierer, d.h. Betonverflüssiger, wurde Glenium^{®}Sky 53 (Handelsbezeichnung der Firma BASF) und als Wasserbindemittel, d.h. Einpresshilfe, wurde EH 550 (Handelsbezeichnung der Firma BASF) verwendet. Der Sand hatte eine Korngrößenverteilung von 0 bis 2 mm.

Die Zusammensetzungen gemäß Tabelle 1 wurden jeweils in einem Vakuummischgefäß zur Entfernung von Luft aus dem Gemisch während 3 Minuten mit Wasser gemischt. Die erhaltene, gießfähige Aufschlämmung wurde in eine Positivform aus silikoniertem Polyester mit demselben Oberflächenprofil wie der endgültige Tonziegel und einer Metallplatte gegossen. Nach einer Absetzzeit von 2 Minuten wurde die Metallplatte entfernt und auf den abgesetzten Schlamm eine formatgleiche Stahlplatte aufgesetzt. Die Oberfläche der Stahlplatte war derart, dass die gipsbasierten und die zementbasierten Zusammensetzungen deutlich besser an der Stahlplatte als an der Polyesterform hafteten.

Die Stahlplatte hatte Ausnehmungen und Bohrungen, um beim späteren Einsatz der Form ein Vakuum anlegen zu können. Der Schlamm wurde dann während 30 Minuten zwischen der Polyesterform und der Stahlplatte gepresst. Die Polyesterform wurde anschließend von den gepressten Teilen getrennt. Die Form blieb auf der Stahlplatte und war fertig zum Gebrauch als Oberform oder Unterform in der Formpresse einer Fertigungslinie für Tonziegel. Probekörper der so hergestellten Formen wurden auf Wasserabsorption, Porosität (Messung nach dem Vakuumverfahren entsprechend DIN 51056) und Verschleißfestigkeit (Längen- und Volumenschwund gemäß Böhme Test entsprechend DIN 52108)geprüft. Das nachfolgende Vergleichsbeispiel 2 (V.-Bsp. 2) bezieht sich auf Messungen an Probekörpern von einer typischen Gipsform, die, wie üblich, aus Halbhydratmassen (Gemenge aus alpha- und beta-Halbhydrat CaSO₄ x 0,5 H₂O) und Abbindemitteln unter Zugabe von Wasser im Verhältnis von etwa 2,5 : 1 hergestellt wurde, d.h. das Gemisch wurde kurz gerührt, die Masse in eine Form gegossen und die Abbindezeit abgewartet.

**Tabelle 2**

| Parameter | Einheit | Bsp. 1 | V.-Bsp. 1 | V.-Bsp. 2 |
|---|---|---|---|---|
| Wasserabsorption | % | 12.9 | 18.1 | 14.2 |
| Offene Poren | % | 26.4 | 31.9 | 22.8 |
| Mittlerer Porenradius | µm | 2.80 | 0.06 | 1.78 |
| Längenabnahme | mm | 0.7 | 0.6 | 0.9 |
| Längenabnahme | % | 78 | 67 | 100 |
| Volumenabnahme | cm³ | 4.6 | 4.6 | 6 |
| Volumenabnahme | % | 77 | 77 | 100 |

Die Längenabnahme gemäß Bsp. 1 ist, bezogen auf das V.-Bsp. 2, um 22 % niedriger und die Volumenabnahme um 23 % niedriger.

Die Ergebnisse in Tabelle 2 zeigen, dass die Eigenschaften der Form aus dem Zement/Wollastonit-Gemisch und diejenigen der Gipsform hinsichtlich Wasserabsorption, Porosität und mittlerem Porenradius ähnlich sind. Für die Form auf Zementbasis ohne Wollastonit ist der mittlere Porenradius zu klein, so dass sich diese kapillaren Poren rasch mit feinen Tonteilchen zusetzen. Die Wasserabsorptionsfähigkeit nimmt deshalb nach wenigen Presszyklen rasch ab, was Wasserflecken auf den geformten Tonziegeln zur Folge hat.

Der Verschleiß der Form nach der Erfindung ist jedoch, wie die obigen Ergebnisse der Verschleißprüfungen zeigen, erheblich kleiner als bei der Gipsform. Versuche im industriellen Maßstab haben dementsprechend gezeigt, dass für eine gegebene Form eines Tonziegels und eine gegebene Tonzusammensetzung die Formen nach der Erfindung eine Standzeit von etwa 3.000 Presszyklen haben, während die Gipsformen eine Standzeit von nur etwa 2.200 Presszyklen haben, bevor der gepresste Tonziegel seine scharfen Konturen verliert.

## Patentansprüche

1. Verfahren zur Herstellung einer Form für das Herstellen von Tondachziegeln durch Nasspressung, bei dem eine Zement und Wollastonit umfassende hydraulische Zusammensetzung mit Wasser zu einer gießfähigen Aufschlämmung gemischt wird.

2. Verfahren nach Anspruch 1, wobei eine Zusammensetzung mit einem Wollastonitgehalt von 2 bis 10 Gew.-%, bezogen auf das Trockengewicht der Zusammensetzung, eingesetzt wird.

3. Verfahren nach Anspruch 1 oder 2, wobei eine Zusammensetzung mit einem Zementgehalt von 20 bis 50 Gew.-%, bezogen auf das Trockengewicht der Zusammensetzung, eingesetzt wird.

4. Verfahren nach einem der Ansprüche 1 bis 3, wobei eine Zusammensetzung eingesetzt wird, die weitere Zusätze wie Kalk, Graphit, Plastifizierungsmittel und/oder Sand aufweist.

5. Verfahren nach einem der Ansprüche 1 bis 4, wobei eine Zusammensetzung eingesetzt wird, die einen Graphitgehalt von bis zu 1 Gew.-%, bezogen auf das Trockengewicht der Zusammensetzung, aufweist.

6. Verfahren nach einem der Ansprüche 1 bis 5, wobei eine Zusammensetzung eingesetzt wird, die Anteile an Wollastonit, Kalk und Zuschlägen von insgesamt zwischen 50 und 80 Gew.-%, bezogen auf das Gewicht der Trockenmasse, aufweist.

7. Verwendung einer Form zur Herstellung von Tondachziegeln durch Nasspressung, wobei die Form hergestellt ist aus einer hydraulischen Zusammensetzung, die Zement und Wollastonit umfasst.

8. Verwendung einer Form zur Herstellung von Tondachziegeln durch Nasspressung nach Anspruch 7, wobei die Form aus einer Zusammensetzung hergestellt ist, die einen Wollastonitgehalt von 2 bis 10 Gew.-%, bezogen auf das Trockengewicht der Zusammensetzung, aufweist.

9. Verwendung einer Form zur Herstellung von Tondachziegeln durch Nasspressung nach Anspruch 7 oder 8, wobei die Form aus einer Zusammensetzung hergestellt ist, die einen Zementgehalt von 20 bis 50 Gew.-%, bezogen auf das Trockengewicht der Zusammensetzung, aufweist.

10. Verwendung einer Form zur Herstellung von Tondachziegeln durch Nasspressung nach einem der Ansprüche 7 bis 9, wobei die Form aus einer Zusammensetzung hergestellt ist, die weitere Zusätze wie Kalk, Graphit, Plastifizierungsmittel und/oder Sand aufweist.

11. Verwendung einer Form zur Herstellung von Tondachziegeln durch Nasspressung nach einem der Ansprüche 7 bis 10, wobei die Form aus einer Zusammensetzung hergestellt ist, die einen Graphitgehalt von bis zu 1 Gew.-%, bezogen auf das Trockengewicht der Zusammensetzung, aufweist.

12. Verwendung einer Form zur Herstellung von Tondachziegeln durch Nasspressung nach einem der Ansprüche 7 bis 11, wobei die Form aus einer Zusammensetzung hergestellt ist, die Anteile an Wollastonit, Kalk und Zuschlägen von insgesamt zwischen 50 und 80 Gew.-%, bezogen auf das Gewicht der Trockenmasse, aufweist.

## Claims

1. Method for producing a mould for producing clay roofing tiles by means of wet moulding, in which a hydraulic composition comprising cement and wollastonite is mixed with water to give a pourable suspension.

2. Method according to Claim 1, wherein a composition is used which has a wollastonite content of 2 to 10 wt%, based on the dry weight of the composition.

3. Method according to Claim 1 or 2, wherein a composition is used which has a cement content of 20 to 50 wt%, based on the dry weight of the composition.

4. Method according to any of Claims 1 to 3, wherein a composition is used that comprises further additions such as lime, graphite, plasticizer and/or sand.

5. Method according to any of Claims 1 to 4, wherein a composition is used that has a graphite content of up to 1 wt%, based on the dry weight of the composition.

6. Method according to any of Claims 1 to 5, wherein a composition is used that has fractions of wollastonite, lime and additives of in total between 50 and 80 wt%, based on the weight of the dry mass.

7. Use of a mould for producing clay roofing tiles by wet moulding, the mould being produced from a hydraulic composition which comprises cement and wollastonite.

8. Use of a mould for producing clay roofing tiles by wet moulding according to Claim 7, the mould being produced from a composition which has a wollastonite content of 2 to 10 wt%, based on the dry weight of the composition.

9. Use of a mould for producing clay roofing tiles by wet moulding according to Claim 7 or 8, the mould being produced from a composition which has a cement content of 20 to 50 wt%, based on the dry weight of the composition.

10. Use of a mould for producing clay roofing tiles by wet moulding according to any of Claims 7 to 9, the mould being produced from a composition which comprises further additions such as lime, graphite, plasticizer and/or sand.

11. Use of a mould for producing clay roofing tiles by wet moulding according to any of Claims 7 to 10, the mould being produced from a composition which has a graphite content of up to 1 wt%, based on the dry weight of the composition.

12. Use of a mould for producing clay roofing tiles by wet moulding according to any of Claims 7 to 11, the mould being produced from a composition which has fractions of wollastonite, lime and additives of in total between 50 and 80 wt%, based on the weight of the dry mass.

## Revendications

1. Procédé pour la fabrication d'un moule pour la fabrication de tuiles en terre cuite par pressage humide, dans lequel on mélange une composition hydraulique contenant du ciment et de la wollastonite avec de l'eau en une suspension apte à la coulée.

2. Procédé selon la revendication 1, une composition présentant une teneur en wollastonite de 2 à 10% en poids, par rapport au poids sec de la composition, étant utilisée.

3. Procédé selon la revendication 1 ou 2, une composition présentant une teneur en ciment de 20 à 50% en poids, par rapport au poids sec de la composition, étant utilisée.

4. Procédé selon l'une quelconque des revendications 1 à 3, une composition présentant d'autres additifs tels que du calcaire, du graphite, un agent de plastification et/ou du sable étant utilisée.

5. Procédé selon l'une quelconque des revendications 1 à 4, une composition présentant une teneur en graphite allant jusqu'à 1% en poids, par rapport au poids sec de la composition, étant utilisée.

6. Procédé selon l'une quelconque des revendications 1 à 5, une composition présentant des proportions de wollastonite, de calcaire et d'additifs d'au total entre 50 et 80% en poids, par rapport au poids de la masse sèche, étant utilisée.

7. Utilisation d'un moule pour la fabrication de tuiles en terre cuite par pressage humide, le moule étant fabriqué à partir d'une composition hydraulique qui contient du ciment et de la wollastonite.

8. Utilisation d'un moule pour la fabrication de tuiles en terre cuite par pressage humide selon la revendication 7, le moule étant fabriqué à partir d'une composition qui présente une teneur en wollastonite de 2 à 10% en poids, par rapport au poids sec de la composition.

9. Utilisation d'un moule pour la fabrication de tuiles en terre cuite par pressage humide selon la revendication 7 ou 8, le moule étant fabriqué à partir d'une composition qui présente une teneur en ciment de 20 à 50% en poids, par rapport au poids sec de la composition.

10. Utilisation d'un moule pour la fabrication de tuiles en terre cuite par pressage humide selon l'une quelconque des revendications 7 à 9, le moule étant fabriqué à partir d'une composition présentant d'autres additifs tels que du calcaire, du graphite, un agent de plastification et/ou du sable.

11. Utilisation d'un moule pour la fabrication de tuiles en terre cuite par pressage humide selon l'une quelconque des revendications 7 à 10, le moule étant fabriqué à partir d'une composition qui présente une teneur en graphite allant jusqu'à 1% en poids, par rapport au poids sec de la composition.

12. Utilisation d'un moule pour la fabrication de tuiles en terre cuite par pressage humide selon l'une quelconque des revendications 7 à 11, le moule étant fabriqué à partir d'une composition présentant des proportions de wollastonite, de calcaire et d'additifs d'au total entre 50 et 80% en poids, par rapport au poids de la masse sèche.
